**Europäisches Patentamt**

**European Patent Office**

**Office européen des brevets**

(11) Publication number: **0 090 009**
**B1**

# EUROPEAN PATENT SPECIFICATION

(45) Date of publication of patent specification: **17.05.89**

(51) Int. Cl.⁴: **F 03 D 11/04**

(21) Application number: **82903068.3**

(22) Date of filing: **04.10.82**

(86) International application number:
**PCT/SE82/00314**

(87) International publication number:
**WO 83/01279 14.04.83 Gazette 83/09**

(54) **INFLATABLE DEVICE FOR CONCENTRATION OF WIND POWER.**

(30) Priority: **05.10.81 SE 8105868**

(43) Date of publication of application:
**05.10.83 Bulletin 83/40**

(45) Publication of the grant of the patent:
**17.05.89 Bulletin 89/20**

(84) Designated Contracting States:
**AT BE CH DE FR GB LI LU NL SE**

(56) References cited:
**EP-A-0 045 202**
**DE-A-2 923 503**
**DE-A-3 003 873**
**DE-C- 830 628**
**SE-A- 72 940**
**US-A-2 384 893**
**US-A-4 073 516**
**US-A-4 166 596**

(73) Proprietor: **Denev, Martin**
**Box 214**
**S-133 02 Saltsjöbaden (SE)**

(72) Inventor: **Denev, Martin**
**Box 214**
**S-133 02 Saltsjöbaden (SE)**

Courier Press, Leamington Spa, England.

# Description

This invention partains to wind power devices being lighter than air and equipped with a wind turbine rotor and an inflatable shroud coaxial with said rotor for increasing the air flow velocity through the turbine, which shroud is constituted by flexible inner and outer walls the space between inner and outer shroud being fillable with a gas.

Such a wind power device is disclosed in US—A—4 166 596, another system of this kind although not being necessarily lighter than air is discussed in WO 81/02041. It is the purpose of the invention to improve such a prior art device by providing new means by which the altitude at which it flies may be changed.

Said device is therefore equipped with a heat pump operatively connected with the turbine and including means for heating or cooling the gas contained between the inner and outer walls of the shroud during operation. The device may furthermore be used as a covering construction or also as a pontoon bridge, or as an avalanche protection. Furthermore, if it is painted in a dark colour, it may be used as sun collector.

Finally if it is used as an avalanche protection, it may be anchored to an inflatable pipe having an inner wall and an outer wall between which a gas is contained and which pipe is fixed on the mountain slope by net wires covering and holding the pipe.

The invention will now be described by way of the figures 1—5, in which:

Figure 1 depicts a device of the kind involved anchored in the earth;

Figure 2 depicts such a device anchored to the bottom of a body of water and partially suspended in said waters;

Figure 3 depicts a number of said devices anchored in a mountain pass, at the same time serving as a cover for road in said pass;

Figure 3A is a schematic drawing of such a device at the same time serving as a pontoon bridge;

Figure 4 depicts such a device anchored to a ship;

Figure 5 depicts another one of said devices, here being used as a protection against avalanches.

As in other known funnel-like devices based on the ideas of Bernulli, and Venturi for concentration of the wind and increasing of the velocity of the wind, the wind (1) to which the inflatable, fillable or combined inflatable/fillable funnel-like device (2) is subjected, is concentrated and passes with increased speed the turbine rotor (3).

As different from other generally known funnel-like devices for concentration of the wind and increasing of the velocity of the wind, which are supported by solid materials, the device (2) according to the prior art document cited hereabove is supported by gas, (6) filling the space between the walls (4) and (5) which are of flexible type (of balloon- or airship-wall type).

The turbine rotor (3) is arranged for driving the electric generator (7). The electric generator (7) can also in its turn run the propeller or turbine (3) when the device is to be transported floating in the air or in the water, on condition that electric power is taken from the complex electric power station/heat-pump-electric batteries (12).

The system may also comprise a diesel- or gas motor which can also be used for driving the heat-pump which heats or cools the gas (6) in the device (2) for increasing or decreasing the altitude at which the device flies. The heat-pump then can also use the surplus heat from the diesel- or gas motor for heating of the gas (6) in the device (2) at upflights.

The heat-pump can also be used for concentration of the heat when the device is also used as solar collector—by being made in a dark colour.

The electric generators (7) can get electric power from solar cells for forward or rear motion of the device, or from the electric battery complex.

The device (2) can be attached to anchors (8) or other objects by a wire (9) or by comparable means.

The device (2) is turned facing the wind by help of the stabilizers (10), and then keeps the wind direction (as a weather vane).

The device can have living quarters, hotel, restaurant, etc. (11).

(12) is a motor, electric generator, heat-pump and electric batteries. The motor can run the heat-pump or the electric generator.

The energy produced by the turbine rotor (3) when the device (2) is directed facing the wind, can be supplied to the heat pump for heating of the gas (6) when it is functioning as an airship, if it is desired to increase the altitude at which the device flies. This heating of the gas (6) is facilitated if the device is made in a dark colour and can absorb the sun energy.

The energy delivered by the rotor turbine (3) can also be used for cooling of the gas (6), via the heat-pump, if it is desired to decrease the altitude.

The previously known rotor shrouds, as well as the subject matter of this invention, have the advantages of being able to use winds of lower velocity, that ice cannot fall from the rotor, and, that the noise emitted by the turbine rotor is considerably reduced since the rotor is partly encapsulated in the funnel. The previously known rotor shrouds are however more expensive to build and this is valid in first hand for larger constructions. A large shroud cast in concrete or made of metal is a relatively heavy and expensive device, considerably more expensive than conventional wind power devices. Further, inflatable constructions also absorb noise and mechanic waves, such as water waves for instance, better than solid constructions.

Wind power systems are as a rule built on high places, where high wind velocities are frequent but difficult to reach, or, on coasts, and these places often lack means of communications.

The transport of building material and personnel to these places is relatively expensive and complicated.

It is difficult and relatively non-productive to build in open air, and it has obvious technical and economical advantages. To be able to build the wind power system ready in a factory, under roof, with highly efficient series production, and then to transport the device ready-made to the place of using.

The inflatable device according to the inventon can be built as a finished product in a factory and can then be transported, the shroud being folded-up or as an airship or also as a boat to practically any place of using.

The shroud if it is folded up, has a many times smaller volume at transport, furthermore it has a many times lower weight, compared to other known devices made of solid materials.

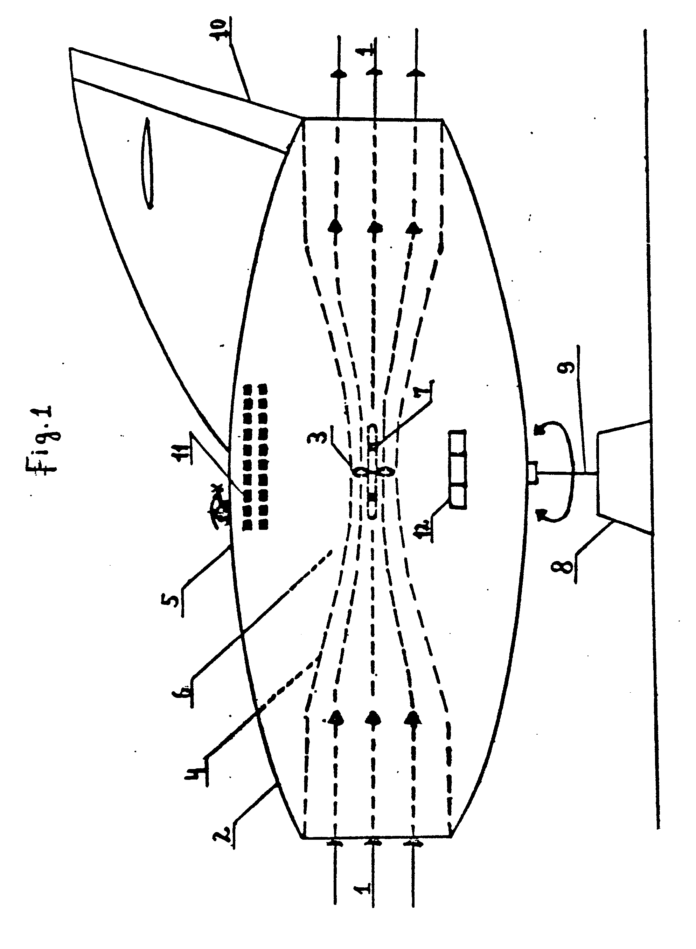

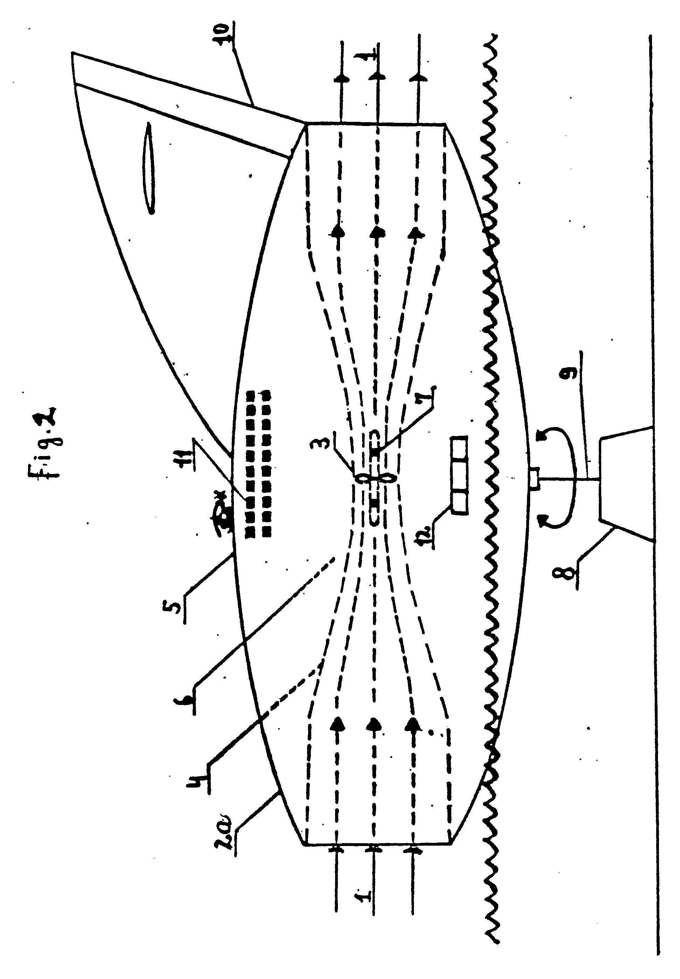

Besides its to the environment less disturbing, lower, noise level (since the turbine rotor 3 is half-encapsulated in a sound absorbing funnel), the subject matter of the invention has also a shape which is more suitable to the environment and can be made similar to shapes existing in nature; for example the shape of a whale (Fig. 2) when the device is to be used on water surfaces, the shape of a bird (Fig. 1) when the device is to be used flying or hovering in the air. The artificial whale (Fig. 2) will not be disturbing with its shape but on the contrary will be an attraction and a gigantic weather vane which also can be observed from a long distance.

The device can be made as long and broad as possible in order to maximally isolate the noise from the turbine rotor.

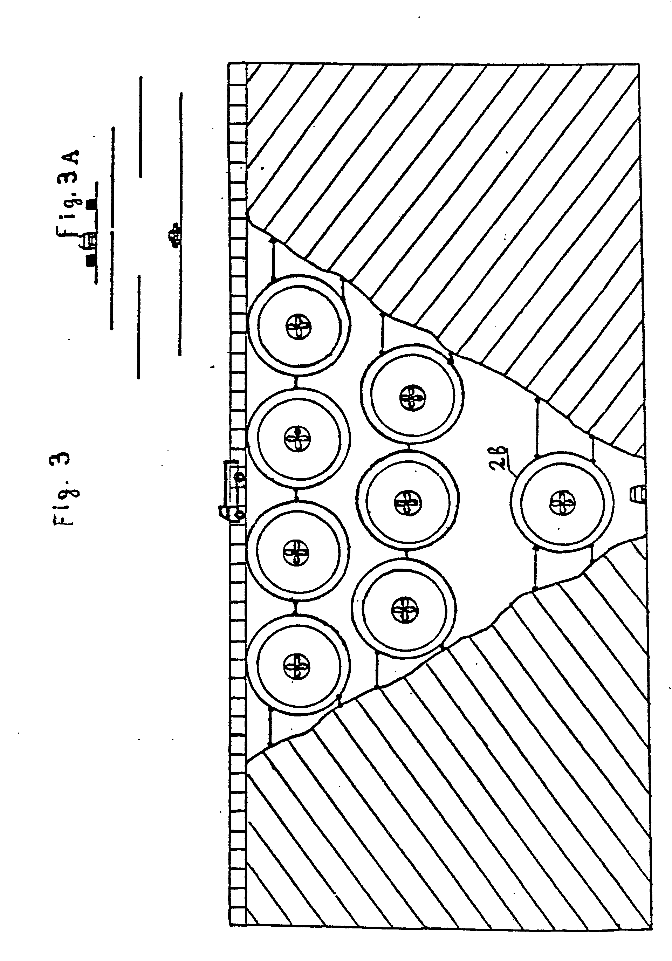

The device (2) can be used, when it is ligher than air, very easily and fast for building a wind power system in mountain areas, such as mountain passes, mountain valleys, e.t.c. which are difficult to reach (Fig. 3 and Fig. 3A).

The device can then be used as a cover over roads in mountain passes (Fig. 3 and 3A), and as an air pontoon bridge (Fig. 3 and 3A).

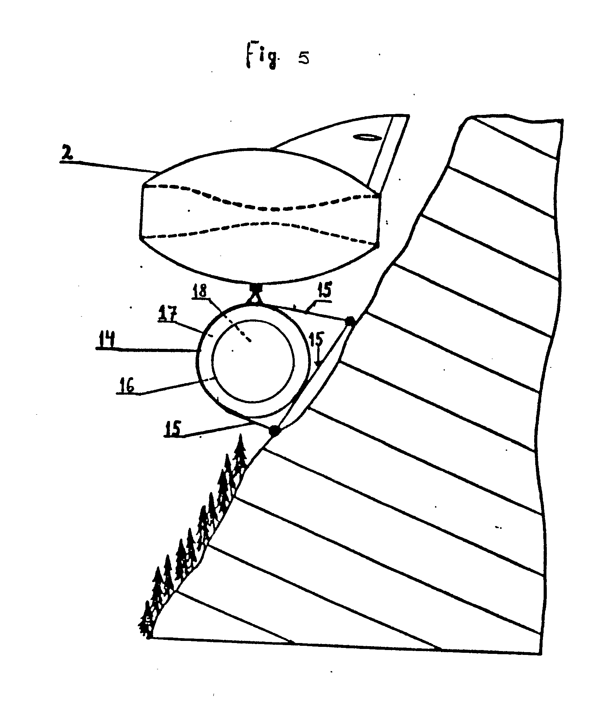

The device according to claim 1 can be used as an avalanche protection. It is therefore anchored to a device (14) (Fig. 5) constituted by an inflatable body, for example of cylinder shape, (which can also fly as a balloon, the place of using), which tightens the wires (or the net), (15), and hangs together with them (or it) as a rucksack, which can be used for anchoring of the wind power system, as an avalanche control system, and as a solar collector.

If an extra inner wall (16) is added to the device (14) it will constitute an inflatable pipe (18), which can be flown as a balloon to the place of Using and also can be used as a pipeline.

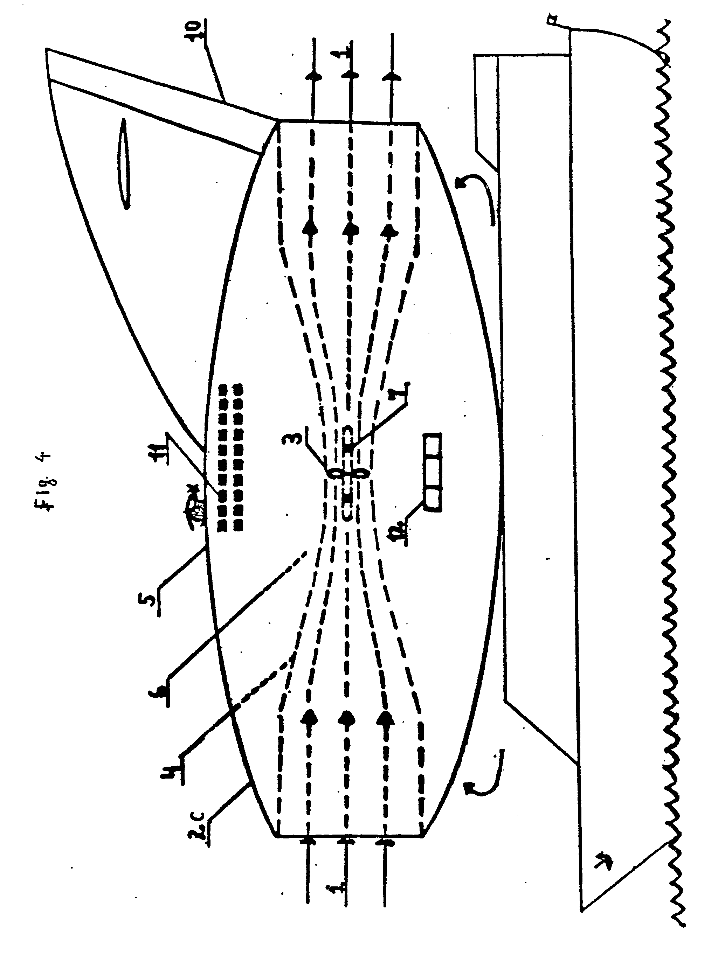

The device (2), (Fig. 4), can be an energy source for a boat (a suitable shape in this case is the disc-shape), a life-saving construction in case of a catastrophe, and, a flying means of transportation from the boat to places on land.

Some of the energy which the device (2) produces can be used for heating of the gas, (6) in the device, in order to keep the device (2) free from ice and snow and also to keep the water surrounding the device (2) free from ice and snow.

The device (2) can, as other airships, be used as flying or floating living-quarters in areas afflicted by earthquakes.

## Claims

1. Wind power device being lighter than air and equipped with a wind turbine rotor (3) and an inflatable shroud coaxial with said rotor for increasing the air flow velocity through the turbine, which shrould is constituted by a flexible inner and outer wall (4, 5) and the space between the inner and outer wall is fillable with a gas characterized in that the device is equipped with a heat pump operatively connected with the turbine and equipped with means for heating or cooling the gas contained between the inner and outer walls of the shroud during operation.

2. Use of the device when inflated according to claim 1 as a covering construction.

3. Use of the device according to claim 1 as an avalanche protection.

4. Use of the device according to claim 1 as a pontoon bridge.

5. Device as defined in claim 1 painted in a dark colour and used as a sun collector.

6. Device as defined in claim 1 and used as an avalanche protection, anchored to an inflatable pipe (18) having an inner wall (16) and an outer wall (14) between which a gas is contained and which pipe is fixed on the mountain slope by net wires (15) covering and holding the pipe.

## Patentansprüche

1. Windkraftkonstruktion, die leichter ist als Luft und mit einem Windlaufrad (3) und einer aufblasbaren, trichterähnlichen Konstruktion koaxial zu dem Laufrad zur Erhöhung der Geschwindigkeit des Winstromes durch die Turbine ausgerüstet ist. Die trichterähnliche Konstruktion besteht aus einer flexiblen inneren und äußeren Wand (4.5); der Raum zwischen der inneren und der äußeren Wand kann mit einem Gas gefüllt werden. Die Vorrichtung zeichnet sich dadurch aus, daß sie mit einer operative an die Turbine angeschlossenen Wärmepumpe und mit Mitteln zur Erwärmung oder Abkühlung des zwischen den inneren und äußeren Wänden der trichterähnlichen Konstruktion eingeschlossenen Gases während des Betriebes ausgerüstet ist.

2. Anwendung der Vorrichtung in aufgeblasenem Zustand laut Patentanspruch 1 als eine Deckkonstruktion.

3. Anwendung der Vorrichtung laut Patentanspruch 1 als Lawinenschutz.

4. Anwendung der Vorrichtung laut Patentanspruch 1 als Pontonbrücke.

5. Die in Patentanspruch 1 definierte Vorrichtung mit Anstrich in dunkler Farbe und Anwendung als Sonnenfänger.

6. Vorrichtung laut Patentanspruch 1 und Einsatz als Lawinenschutz, verankert an einem aufblasbaren Rohr (18) mit einer inneren Wand 16 und einer äußeren Wand 14, zwischen denen das Gas eingeschlossen ist und wobei das Rohr am Berghang mit Netzdraht 15, der das Rohr deckt und hält, befestigt ist.

**Revendications**

1. Construction aérodynamique plus légère que l'air, équipée un rotor de turbine à vent (3) et une construction gonflable en forme d'entonnoir raccordée coaxialement avec le rotor précité pour accélérer la vitesse du débit à travers la turbine, l'entonnoir étant composé d'une paroi intérieure flexible et d'une paroi extérieure (4.5), l'espace entre les deux parois pouvant être rempli de gaz, l'ensemble étant caractérisé par l'implantation d'une pompe à chaleur raccordée sur la turbine et munie d'un agent pour le chauffage ou le refroidissement du gaz enfermé entre la paroi intérieure et la paroi extérieure lorsque la construction en forme d'entonnoir est en service.

2. Utilisation du dispositif à l'état gonflé en conformité de la demande de brevet 1, comme construction couverte.

3. Utilisation du dispositif en conformité de la demande de brevet 1, comme protection contre les avalanches.

4. Utilisation du dispositif en conformité de la demande de brevet 1, comme pont flottant.

5. Le dispositif défini dans la demande de brevet 1 enduit d'une peinture foncée pour utilisation comme capteur solaire.

6. Dispositif défini dans la demande de brevet 1 utilisé comme protection contre les avalanches solidaire d'un tuyau gonflable (18) composé d'une paroi intérieure 16 et d'une paroi extérieure 14, ces deux parois enfermant un gaz, le tuyau étant attaché sur le versant de la montagne par un grillage (15) couvrant et maintenant le tuyau.

Fig.1

EP 0 090 009 B1

Fig.2

Fig. 3

Fig. 3A

2B

EP 0 090 009 B1

Fig. 4

Fig. 5